# EUROPEAN PATENT SPECIFICATION

(11) **EP 2 779 755 B1**
(45) Date of publication and mention of the grant of the patent: **26.04.2017**
(21) Application number: 12846984.8
(22) Date of filing: 06.11.2012
(51) Int. Cl.: H04W 48/02, H04W 48/18

(54) **MOBILE STATION CONFIGURED TO DETERMINE ACCESS CONTROL FOR RADIO BASE STATION CONNECTED TO TWO MOBILE COMMUNICATION NETWORKS**
MOBILSTATION ZUR BESTIMMUNG VON ZUGANGSKONTROLLE FÜR EINE FUNKBASISSTATION, DIE MIT ZWEI MOBILFUNKNETZEN VERBUNDEN IST
STATION MOBILE CONFIGURÉE AFIN DE DÉTERMINER LE CONTRÔLE D'ACCÈS POUR UNE STATION DE BASE RADIO RELIÉE À DEUX RÉSEAUX MOBILES DE COMMUNICATIONS

(30) Priority: 07.11.2011 JP 2011244001
(43) Date of publication of application: 17.09.2014
(73) Proprietor: NTT DOCOMO, INC., Chiyoda-ku Tokyo 100-6150 (JP)
(72) Inventor: HAPSARI, Wuri Andarmawanti, Tokyo 100-6150 (JP); TAKAHASHI, Hideaki, Tokyo 100-6150 (JP); AOYAGI, Kenichiro, Tokyo 100-6150 (JP)
(74) Representative: Hoffmann Eitle
(86) International application number: PCT/JP2012/078701
(87) International publication number: WO 2013/069626

(56) References cited:
- EP-A2- 2 373 110
- WO-A1-2013/020582
- RENESAS MOBILE EUROPE LTD: "Broadcast Aspects for Full MOCN", 3GPP DRAFT; GP-111249 FULL MOCN CODING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Gothenburg; 20110829, 25 August 2011 (2011-08-25), XP050536870, [retrieved on 2011-08-25]
- ZTE ET AL: "Clarification on how EAB is applied in Shared Network", 3GPP DRAFT; S1-111376, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Xian; 20110509, 16 May 2011 (2011-05-16), XP050515452, [retrieved on 2011-05-16]
- RENESAS MOBILE EUROPE LTD: "Mobility Aspects and Full MOCN", 3GPP DRAFT; GP-111248 FULL MOCN MOBILITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Gothenburg; 20110829, 25 August 2011 (2011-08-25), XP050536869, [retrieved on 2011-08-25]
- TELEFON AB LM ERICSSON ET AL: "Realizing Extended Access Barring", 3GPP DRAFT; GP-110973, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Dallas; 20110516, 20 May 2011 (2011-05-20), XP050487387, [retrieved on 2011-05-20]
- NOKIA SIEMENS NETWORKS ET AL: "Extended Access Barring for LTE and UMTS", 3GPP DRAFT; R2-112995 (EAB FOR LTE-UMTS), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Barcelona, Spain; 20110509, 2 May 2011 (2011-05-02), XP050495120, [retrieved on 2011-05-02]
- INTERDIGITAL: 'Aspects of EAB Implementation' 3GPP TSG-RAN WG2#75BIS R2-115365 10 October 2011, XP008173500
- ASUSTEK: 'Discussion on the signaling of EAB information' 3GPP TSG-RAN WG2#75BIS R2-115411 10 October 2011, XP050541075
- 3RD GENERATION PARTNERSHIP PROJECT: 'Technical Specification Group Radio Access Network; Evolved Universal Terrestrial Radio Access (E-UTRA);Radio Resource Control (RRC);Protocol specification(Release 9)' 3GPP TS 36.331 V9.8.0 September 2011, pages 118 - 120, XP055150484

## Description

### TECHNICAL FIELD

The present invention relates to a mobile station.

### BACKGROUND ART

Document "Renesas Mobile Europe LTD: "Broadcast Aspects for Full MOCN", 3GPP Draft GP-111249" relates to issues on how to broadcast Full MOCN information specifically pertaining to PLMN IDs and access control.

Document "ZTE et al: "Clarification on how EAB is applied in Shared Network", 3GPP draft S1-111376" suggests that for multiple core networks sharing the same access network, the access network shall be able to apply the EAB for the different core networks individually.

Document "Renesas Mobile Europe LTD: "Mobility Aspects and Full MOCN", 3GPP Draft GP-111248" suggests that additional signaling may be required in order to support mobility procedures between a cell and appropriate neighbouring cells of the PLMNs part of a multiple PLMN list.

Document "Telefon Ab LM Ericsson et al: "realizing Extended Access Barring", 3GPP Draft GP-110973 suggests that System Information is modified to support the transmission of Extended Access Barring Information.

Document WO 2013/020582 A1, which is relevant for the present application only in accordance with Art. 54(3) EPC, provides an apparatus, comprising base station means adapted to provide a base station functionality for a first user equipment attached to a first network and a second user equipment attached to a second network different from the first network.

Nowadays, methods for implementing MTC (Machine Type Communication) are actively discussed in meetings for defining the specifications for the 3GPP LTE (Long Term Evolution).

Mobile stations UE supporting MTC (hereinafter referred to as mobile stations MTC-UE) are assumed to be used in many devices such, for example, as gas meters, electricity meters, and vending machines. On the assumption that the number of mobile stations MTC-UE will be enormous, appropriate access control will be necessary.

At present, the access control for the mobile stations MTC-UE is defined on the basis of the existing access control (ACB: Access Class Barring) for the UTRAN (Universal Terrestrial Radio Access Network).

### PRIOR ART DOCUMENTS

### NON-PATENT DOCUMENTS

Non-patent document 1: 3GPP TS24.301
Non-patent document 2: 3GPP TS23.122
Non-patent document 3: 3GPP TS36.304

### SUMMARY OF THE INVENTION

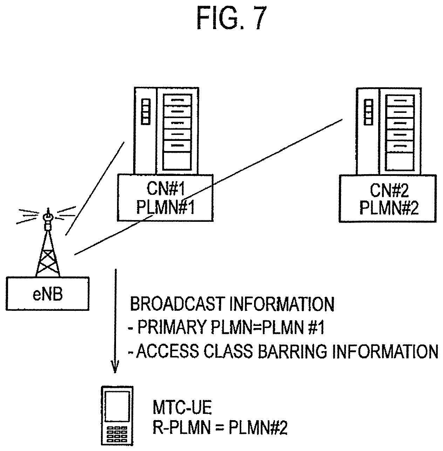

Here, in a presumable case in the LTE, a radio base station eNB in a radio access network is connected to multiple PLMNs (Public Land Mobile Networks) or core networks, or in other words, the multiple PLMNs share the same radio base station eNB (see Fig. 7).

Even in such a case, according to the existing access control, a mobile station MTC-UE is configured to determine the existence of access control for a P-PLMN (Primary-PLMN or a first mobile communication network) always on the basis of EAB (Extended Access Barring) parameters to be applied to the P-PLMN, without reference to an R-PLMN (Registered-PLMN or a registered mobile communication network).

Here, the P-PLMN is the PLMN in the top of a PLMN list included in an SIB 1 (System Information Block 1) broadcast by the radio base station eNB.

In the meantime, if the mobile station MTC-UE selects a PLMN in cell selection processing and succeeds in an attachment procedure for the selected PLMN, then the selected PLMN will serve as the R-PLMN.

However, in a conventional mobile communication system, the mobile station MTC-UE is configured to determine the existence of the access control on the basis of the EAB parameters to be applied to the P-PLMN without exception in the above case. For this reason, the conventional mobile communication system has a problem that, even when a failure or congestion occurs in the R-PLMN, it is still possible to access the R-PLMN as long as the P-PLMN is in normal operation.

The present invention has been made in view of the aforementioned problem. An objective of the present invention is to provide a mobile station which is capable of appropriately performing access control in a case where a radio base station eNB is connected to multiple PLMNs.

The object of the invention is achieved by the subject-matter of the independent claim.

A first feature of an example is summarized as a mobile station supporting machine type communication and used in a mobile communication system having a configuration in which a radio base station is connected to a first mobile communication network and a second mobile communication network. Here, the mobile station includes a determination unit configured to determine existence of access control. The first mobile communication network is a mobile communication network in the top of a mobile communication network list included in first broadcast information transmitted by the radio base station, while the second mobile communication network is a mobile communication network, for which an attachment procedure conducted by the mobile station is successful. Meanwhile, when a second access control information for machine type communication to be applied to the second mobile communication network is set in second broadcast information transmitted by the radio base station in addition to a first access control information for machine type communication to be applied to the first mobile communication network, the determination unit determines the existence of the access control on the basis of the second access control information for machine type communication.

A second feature of an example is summarized as a mobile station supporting machine type communication and used in a mobile communication system having a configuration in which a radio base station is connected to a first mobile communication network and a second mobile communication network. Here, the mobile station includes a determination unit configured to determine existence of access control. The first mobile communication network is a mobile communication network in the top of a mobile communication network list included in first broadcast information received by the radio base station, while the second mobile communication network is a mobile communication network for which an attachment procedure conducted by the mobile station is successful. When mobile communication network indication information specifying a mobile communication network is not included in access control information for machine type communication in second broadcast information received by the radio base station, the determination unit determines that the access control information for machine type communication is first access control information for machine type communication to be applied to the first mobile communication network, and determines the existence of the access control on the basis of the first access control information for machine type communication. Meanwhile, when the mobile communication network indication information is included in the access control information for machine type communication in the second broadcast information and the mobile communication network specified by the mobile communication network indication information is the same as the second mobile communication network, the determination unit determines that the access control information for machine type communication is second access control information for machine type communication to be applied to the second mobile communication network, and determines the existence of the access control on the basis of the second access control information for machine type communication.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a diagram showing an example of a format of an SIB 2 to be broadcast by a radio base station in the mobile communication system according to the first embodiment of the present invention.
[Fig. 3] Fig. 3 is another diagram showing the example of the format of the SIB 2 to be broadcast by the radio base station in the mobile communication system according to the first embodiment of the present invention.
[Fig. 4] Fig. 4 is a functional block diagram of a mobile station according to the first embodiment of the present invention.
[Fig. 5] Fig. 5 is a flowchart showing an operation of the mobile station according to the first embodiment of the present invention.
[Fig. 6] Fig. 6 is another flowchart showing the operation of the mobile station according to the first embodiment of the present invention.
[Fig. 7] Fig. 7 is an overall configuration diagram of a conventional mobile communication system.

### MODE FOR CARRYING OUT THE INVENTION

### (Mobile Communication System According to First Embodiment of Present Invention)

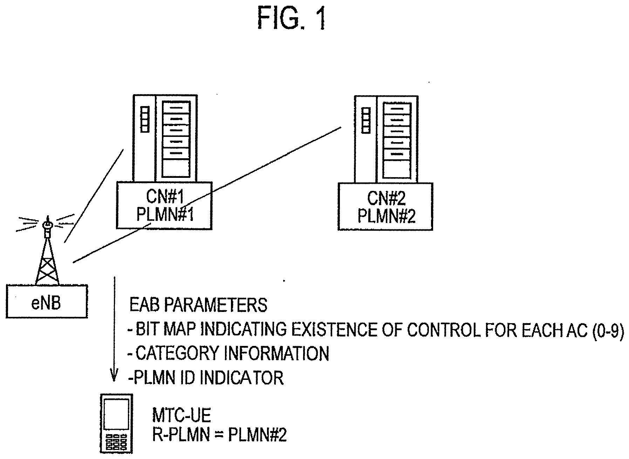

A mobile communication system according to a first embodiment of the present invention will be described with reference to Fig. 1 to Fig. 6.

As shown in Fig. 1, a mobile communication system according to the embodiment includes a PLMN #1, a CN (core network) #1, a PLMN #2 (or a CN #2), and a radio base station eNB.

In the mobile communication system of the embodiment, the radio base station eNB in a radio access network is configured to be connected to the multiple PLMNs #1 and #2 (or the CNs #1 and #2). In other words, the multiple PLMNs #1 and #2 are configured to share the same radio base station eNB.

In the example of Fig. 1, the PLMN #1 is assumed to be a P-PLMN and the PLMN #2 is assumed to be an R-PLMN from the perspective of a mobile station MTC-UE.

In addition, the mobile communication system of the embodiment is configured to be capable of providing the MTC.

Meanwhile, the radio base station eNB is configured to transmit broadcast information, which includes EAB parameters, in a subordinate cell. Specifically, the EAB parameters are designed to be transmitted in the form of an SIB 2, which is a type of the broadcast information.

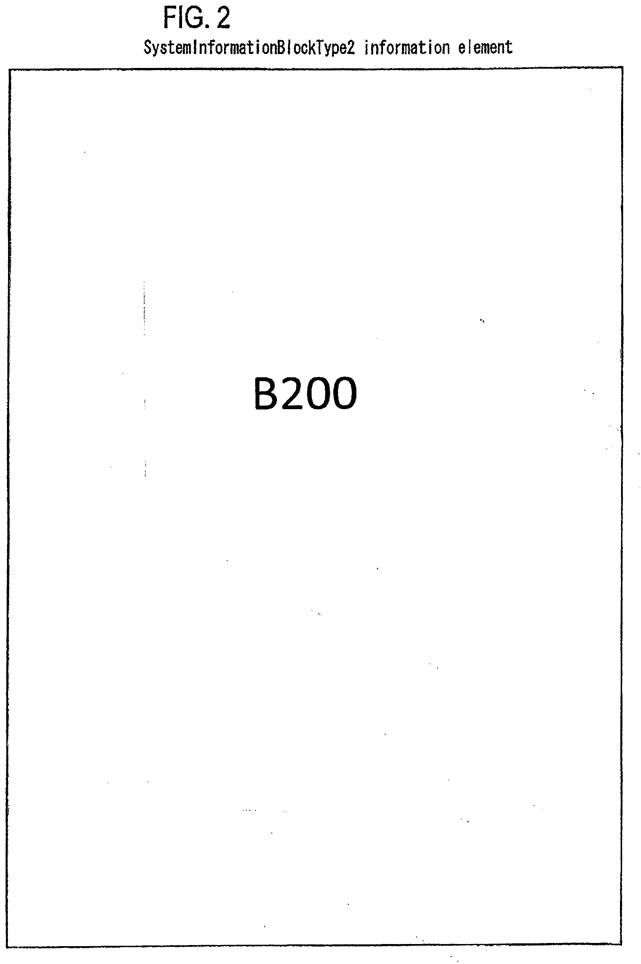

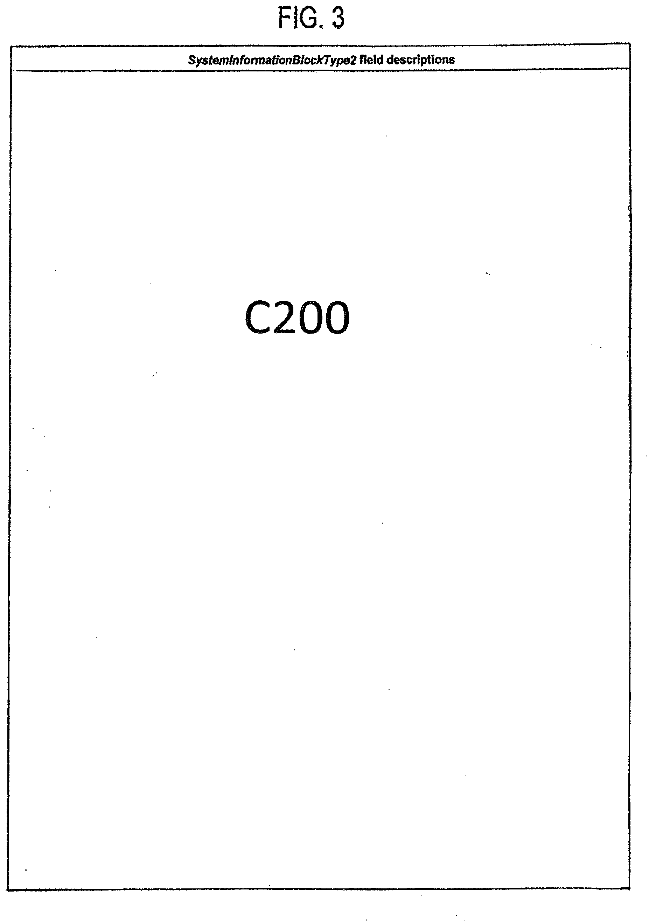

An example of a format of the SIB 2 is shown in Fig. 2 and Fig. 3. As shown in Fig. 2, the EAB parameters are designed to be transmitted in the form of an information element "ac-BarringForEAB" in the SIB 2.

Here, the EAB parameters constitute access control information to be applied to the mobile station MTC-UE supporting MTC. An ordinary mobile station UE, which is not supporting MTC, ignores the EAB parameters.

For example, the EAB parameters include a bit map indicating existence (Bar/Not Bar) of control for each of access classes (ACs) from "0" to "9."

Here, the EAB parameters may include a bit map indicating existence (Bar/Not Bar) of control for each of access classes from "11" to "15" as is the case in the LTE (Release-8/9).

As shown in Fig. 2 and Fig. 3, the bit map is designed to be transmitted in the form of an information element "eabStatus" in the SIB 2.

Moreover, the EAB parameters include bits (category information) each indicating "UE Category" ranging from "A" to "C."

Here, "UE Category"= "A" is a category for a mobile station MTC-UE to which the EAB parameters are to be applied (i.e., the mobile station MTC-UE supporting MTC).

Moreover, "UE Category"= "B" is a category for a mobile station MTC-UE to which the EAB parameters are to be applied, and which is roaming.

Furthermore, "UE Category"= "C" is a category for a mobile station MTC-UE to which the EAB parameters are to be applied, which is roaming, and which is not connected to a PLMN on an "Operator defined PLMN selector list" set in a USIM.

Here, the "Operator defined PLMN selector list" is a list of PLMNs for roaming that are designated by a telecommunications carrier to which the mobile station MTC-UE subscribes.

As shown in Fig. 2 and Fig. 3, the category information is designed to be transmitted in the form of an information element "eabCategory" in the SIB 2.

The EAB parameters may further include "PLMN ID Indicator". To be more precise, the "PLMN ID Indicator" is PLMN indication information that indicates which one of the PLMNs the EAB parameters involve.

By incorporation of the "PLMN ID Indicator" in the EAB parameters, it is possible to broadcast the EAB parameters for the multiple PLMNs in addition to the EAB parameters for the P-PLMN.

As shown in Fig. 2 and Fig. 3, the "PLMN ID Indicator" is designed to be transmitted in the form of an information element "plmnIdIndicator" in the SIB 2.

Here, the EAB parameters may also include information to specify the P-PLMN.

Meanwhile, the above-described list of PLMNs is designed to be transmitted in the form of an SIB 1, which is a type of the broadcast information.

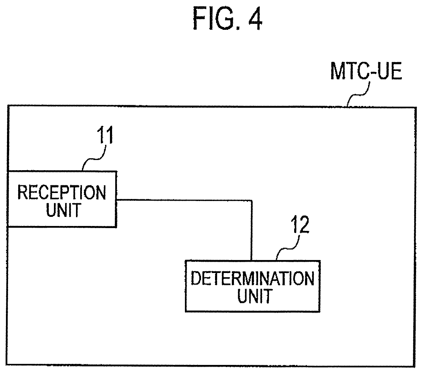

As shown in Fig. 4, the mobile station MTC-UE includes a reception unit 11 and a determination unit 12.

The reception unit 11 is configured to receive the broadcast information (such as MIBs and SIBs) transmitted from the radio base station eNB.

The determination unit 12 is configured to determine the existence of the access control on the basis of access control information for the MTC (i.e., the EAB parameters) received by the reception unit 11.

To be more precise, the determination unit 12 is configured, when the "PLMN ID Indicator" is included in the received EAB parameters, to determine that the EAB parameters are the EAB parameters for the PLMN specified by the "PLMN ID Indicator."

On the other hand, the determination unit 12 is configured, when the "PLMN ID Indicator" is not included in the received EAB parameters, to determine that the EAB parameters are the EAB parameters for the P-PLMN.

In addition, the determination unit 12 is configured, when EAB parameters for the R-PLMN to be applied to the R-PLMN are set in the broadcast information in addition to the EAB parameters for the P-PLMN to be applied to the P-PLMN, to determine the existence of the access control on the basis of the EAB parameters for the R-PLMN.

On the other hand, the determination unit 12 is configured, when the EAB parameters to be applied to the R-PLMN are the same as the EAB parameters to be applied to the P-PLMN, to determine the existence of the access control on the basis of the EAB parameters.

In other words, the determination unit 12 is configured, when the EAB parameters for the R-PLMN to be applied to the R-PLMN are not set in the broadcast information in addition to the EAB parameters for the P-PLMN to be applied to the P-PLMN, to determine the existence of the access control on the basis of the EAB parameters for the P-PLMN.

Meanwhile, the determination unit 12 may be configured, when the received EAB parameters include "PLMN ID Indicator" specifying the R-PLMN, to determine that the EAB parameters are the EAB parameters for the R-PLMN and to determine the existence of the access control on the basis of the EAB parameters for the R-PLMN.

Here, the determination unit 12 may be configured, when the received EAB parameters include "PLMN ID Indicator" but does not include the "PLMN ID Indicator" specifying the R-PLMN, to determine that the access control does not take place.

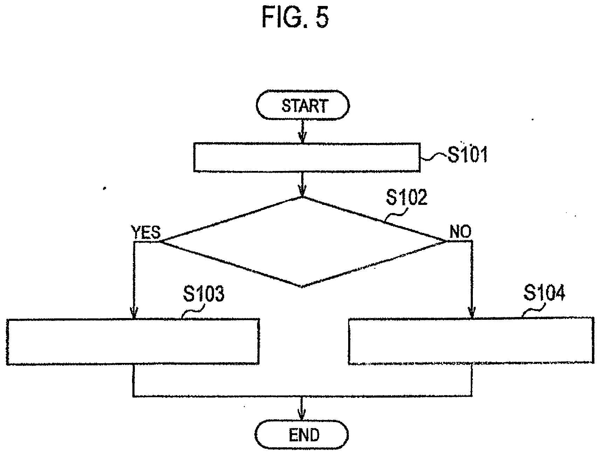

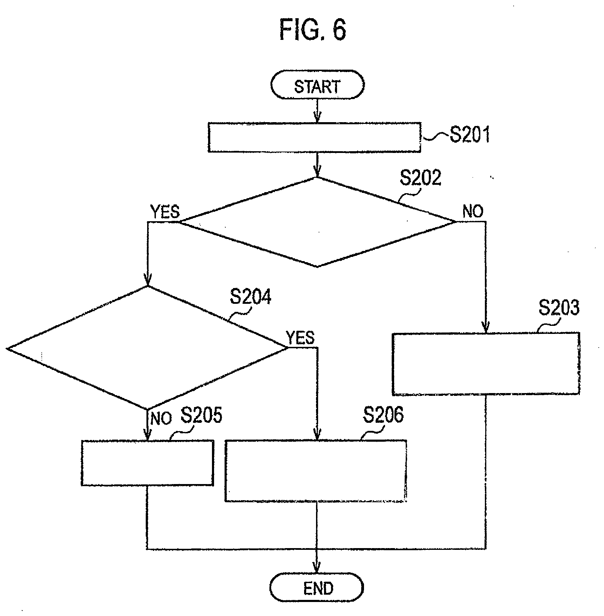

Examples of an operation of the mobile station MTC-UE according to the embodiment will be described below with reference to Fig. 5 and Fig. 6.

First, an operation example 1 of the mobile station MTC-UE according to the embodiment will be described with reference to Fig. 5.

In step S101, the mobile station MTC-UE acquires the EAB parameters included in the broadcast information from the radio base station eNB. Then, in step S102, the mobile station MTC-UE determines whether or not the same EAB parameters are broadcast in terms of the PLMN #1 and the PLMN #2.

In the case of "Yes, "the mobile station MTC-UE determines the existence of the access control on the basis of the EAB parameters for the P-PLMN in step S103.

In the case of "No," i.e., in the case where the mobile station MTC-UE determines that the EAB parameters different from the EAB parameters for the P-PLMN to be applied to the P-PLMN are broadcast, the mobile station MTC-UE determines the existence of the access control on the basis of the EAB parameters for the R-PLMN in step S104.

If the mobile station MTC-UE determines in step S104 that the EAB parameters for the R-PLMN are not broadcast, then the mobile station MTC-UE determines that the access control does not take place.

Second, an operation example 2 of the mobile station MTC-UE according to the embodiment will be described with reference to Fig. 6.

In step S201, the mobile station MTC-UE acquires the EAB parameters included in the broadcast information from the radio base station eNB. Then, in step S202, the mobile station MTC-UE determines whether or not the EAB parameters include the "PLMN ID Indicator."

In the case of "Yes, " the operation proceeds to step S204. In the case of "No," the operation proceeds to step S203.

In step S203, the mobile station MTC-UE determines that the received EAB parameters are the EAB parameters for the P-PLMN, and determines the existence of the access control on the basis of the EAB parameters for the P-PLMN.

On the other hand, in step S204, the mobile station MTC-UE determines whether or not the PLMN specified by the "PLMN ID Indicator" is the same as the R-PLMN of its own.

In the case of "Yes, " the operation proceeds to step S206. In the case of "No," the operation proceeds to step S205.

In step S205, the mobile station MTC-UE determines that the access control does not take place.

On the other hand, in step S206, the mobile station MTC-UE determines that the received EAB parameters are the EAB parameters for the R-PLMN, and determines the existence of the access control on the basis of the EAB parameters for the R-PLMN.

According to the mobile communication system of an illustrative example, the mobile station MTC-UE can switch whether it is appropriate to determine the existence of the access control for the P-PLMN or it is appropriate to determine the existence of the access control for the R-PLMN, on the basis of whether or not the same EAB parameters are broadcast in terms of the PLMN #1 (the P-PLMN) and the PLMN #2 (the R-PLMN). Thus, it is possible to reduce a dependency on the existence of the access control for the P-PLMN.

The features of the above-described example may also be expressed as follows.

A first feature of the example is summarized as a mobile station MTC-UE supporting MTC (machine type communication) used in a mobile communication system having a configuration in which a radio base station eNB is connected to a P-PLMN (first mobile communication network) and a R-PLMN (second mobile communication network). Here, the mobile station MTC-UE includes a determination unit 12 configured to determine existence of access control. The P-PLMN is a PLMN in the top of a PLMN list (mobile communication network list) included in an SIB1 (first broadcast information), while the R-PLMN is a PLMN, for which an attachment procedure conducted by the mobile station MTC-UE is successful. Meanwhile, when an EAB parameter for the R-PLMN (second access control information for machine type communication) to be applied to the R-PLMN is set in an SIB2 (second broadcast information) in addition to an EAB parameter for a P-PLMN (first access control information for machine type communication) to be applied to the P-PLMN, the determination unit 12 determines the existence of the access control on the basis of the EAB parameter for the R-PLMN.

A second feature of the example is summarized as the mobile station MTC-UE supporting MTC and used in the mobile communication system having the configuration in which the radio base station eNB is connected to a P-PLMN and an R-PLMN. Here, the mobile station MTC-UE includes the determination unit 12 configured to determine the existence of the access control. The P-PLMN is a PLMN in the top of the PLMN list included in the SIB 1 while the R-PLMN is a PLMN for which an attachment procedure conducted by the mobile station MTC-UE is successful. When the "PLMN ID Indicator (mobile communication network indication information specifying a mobile communication network) "is not included in the EAB parameters (access control information for machine type communication) in the SIB 2, the determination unit 12 determines that the EAB parameters are the EAB parameters for the P-PLMN and determines the existence of the access control on the basis of the EAB parameters for the P-PLMN. Meanwhile, when the "PLMN ID Indicator" is included in the EAB parameters in the SIB 2 and the PLMN specified by the "PLMN ID Indicator" is the same as the R-PLMN, the determination unit 12 determines that the EAB parameters are the EAB parameters for the R-PLMN and determines the existence of the access control on the basis of the EAB parameters for the R-PLMN.

In the second feature of the example, the determination unit 12 may be configured to determine that the access control does not take place when the "PLMN ID Indicator" is included in the EAB parameters in the SIB 2 and the PLMN specified by the "PLMN ID Indicator" is not the same as the R-PLMN.

Note that the above described operations of the radio base station eNB, the mobile station MTC-UE or the like may be implemented by hardware, may be implemented by a software module executed by a processor, or may be implemented by a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the radio base station eNB, mobile station MTC-UE or the like. Also, the storage medium and the processor may be provided in the radio base station eNB, mobile station MTC-UE or the like as a discrete component.

Hereinabove, the present invention has been described in detail using the above embodiment; however, it is apparent to those skilled in the art that the present invention is not limited to the embodiment described herein. Modifications and variations of the present invention can be made without departing from the scope of the present invention defined by the scope of claims. Thus, what is described herein is for illustrative purpose, and has no intention whatsoever to limit the present invention.

Reference sign B200 in Fig. 2 indicates the SystemInformationBlockType2 information element:

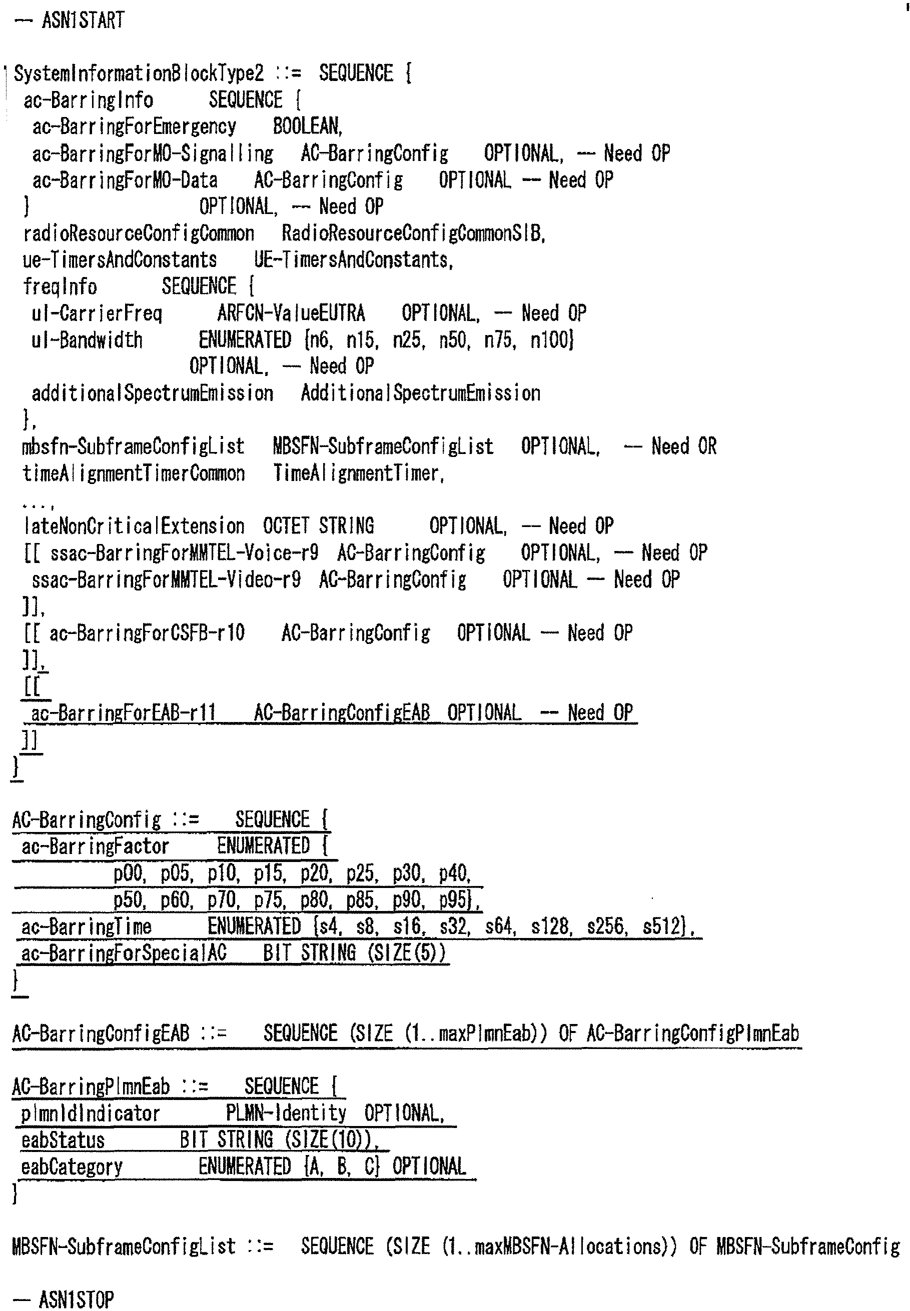

Reference sign C200 in Fig. 3 indicates the SystemInformationBlockType2 field descriptions:

| |
|---|
| ***ac-BarringFactor*** |
| If the random number drawn by the UE is lower than this value, access is allowed. Otherwise the access is barred. The values are interpreted in the range [0,1): p00 = 0, p05 = 0.05, p10 = 0.10,...,p95 = 0.95. Values other than p00 can only be set If all bits of the corresponding *ac-BarringForSpecialAC* are set to 0. |
| ***ac-BarringForCSFB*** |
| Access class barring for mobile originating CS fallback. |
| ***ac-BarringForEmergency*** |
| Access class barring for AC 10. |
| ***ac-BarringForMO-Data*** |
| Access class barring for mobile originating calls. |
| ***ac-BarringForMO-Signalling*** |
| Access class barring for mobile originating signalling. |
| ***ac-BarringForSpecialAC*** |
| Access class barring for AC 11-15. The first/ leftmost bit is for AC 11, the second bit is for AC 12, and so on. |
| ***ac-BarringTime*** |
| Mean access barring time value in seconds. |
| ***ac-BarringForEAB*** |
| Access barring for EAB configured UE |
| ***eabStatus*** |
| EAB related access class barrinq for AC 0-9. The first/ leftmost bit for AC 0, the second bit is for AC 1. and so on |
| ***eabCategory*** |
| Category of EAB configured UE as defined in 22.011 |
| ***additionalSpectrumEmission*** |
| The UE requirements related to IE *AdditionalSpectrumEmission* are defined in TS 36.101 [42, table 6.2.4.1] |
| ***mbsfn-SubframeConfigList*** |
| Defines the subframes that are reserved for MBSFN in downlink. |
| ***ssac-BarringForMMTEL-Video*** |
| Service specific access class barring for MMTEL video originating calls. |
| ***ssac-BarringForMMTEL-Voice*** |
| Service specific access class barring for MMTEL voice originating calls. |
| ***ul-Bandwidth*** |
| Parameters: transmission bandwidth configuration, N_{RB}, in uplink, see TS 36.101 [42, table 5.6-1]. Value n6 corresponds to 6 resource blocks, n15 to 15 resource blocks and so on. If for FDD this parameter is absent, the uplink bandwidth is equal to the downlink bandwidth. For TDD this parameter is absent and it is equal to the downlink bandwidth. |

The reference signs of Fig. 5 indicate:
S101 - Receive EAB Parameters
S102 - Are Same EAB Parameters Set For PLMNS Sharing Same RAN?
S103 - Determine Existence Of Access Control For P-PLMN
S104 - Determine Existence Of Access Control For R-PLMN

The reference signs of Fig. 6 indicate:
S201 - Receive EAB Parameters
S202 - Is "PLMN ID Indicator" Included?
S203 - Determine Existence Of Access Control For R-PLMN
S204 - Is R-PLMN Same As PLMN Indicated By "PLMN ID Indicator"?
S205 - No Access Control
S206 - Determine Existence Of Access Control For R-PLMN

### INDUSTRIAL APPLICABILITY

As described above, according to the present invention, it is possible to provide a mobile station which is capable of appropriately performing access control in a case where a radio base station eNB is connected to multiple PLMNs.

### EXPLANATION OF THE REFERENCE NUMERALS

- PLMN: mobile communication network
- eNB: radio base station
- MTC-UE: mobile station
- 11: reception unit
- 12: determination unit

## Claims

1. A mobile station (MTC-UE) supporting machine type communication and configured to be used in a mobile communication system having a configuration in which a radio base station (eNB) is connected to a first mobile communication network (PLMN#1) and a second mobile communication network (PLMN#2) and in which the first mobile communication network (PLMN#1) and the second mobile communication network (PLMN#2) include different core networks (CN#1, CN#2), the mobile station (MTC-UE) comprising:
a determination unit (12) configured to determine existence of access control, wherein
the first mobile communication network (PLMN#1) is a mobile communication network in the top of a mobile communication network list included in first broadcast information received by the mobile station (MTC-UE),
the second mobile communication network (PLMN#2) is a mobile communication network, for which an attachment procedure conducted by the mobile station (MTC-UE) is successful, and
responsive to an EAB, extended access barring, parameter for an R-PLMN, registered-public land mobile network, to be applied to the second mobile communication network (PLMN#2) set in second broadcast information received by the mobile station (MTC-UE) in addition to an EAB parameter for a P-PLMN, primary-PLMN, to be applied to the first mobile communication network (PLMN#1), the determination unit (12) is configured to determine the existence of the access control on the basis of the EAB parameter for the R-PLMN.

## Patentansprüche

1. Mobilstation (MTC-UE), die eine Maschinentyp-Kommunikation unterstützt und dazu konfiguriert ist, in einem Mobilkommunikationssystem mit einer Konfiguration verwendet zu werden, bei welcher eine Funkbasisstation (eNB) mit einem ersten Mobilkommunikationsnetzwerk (PLMN#1) und einem zweiten Mobilkommunikationsnetzwerk (PLMN#2) verbunden ist und bei welcher das erste Mobilkommunikationsnetzwerk (PLMN#1) und das zweite Mobilkommunikationsnetzwerk (PLMN#2) verschiedene Kernnetzwerke (CN#1, CN#2) beinhalten, wobei die Mobilstation (MTC-UE) umfasst:
- eine Bestimmungseinheit (12), die zum Bestimmen des Vorhandenseins von Zugriffssteuerung konfiguriert ist, wobei
- das erste Mobilkommunikationsnetzwerk (PLMN#1) ein Mobilkommunikationsnetzwerk an der Spitze einer Mobilkommunikationsnetzwerk-Liste ist, die in erster von der Mobilstation (MTC-UE) empfangener Rundsendeinformation enthalten ist,
- das zweite Mobilkommunikationsnetzwerk (PLMN#2) ein Mobilkommunikationsnetzwerk ist, für welches eine von der Mobilstation (MTC-UE) durchgeführte Anhängeprozedur erfolgreich ist, und
- anprechend auf einen EAB-, Erweiterte-Zugriffs-Sperrung [extended access barring], Parameter für ein R-PLMN, registriert-öffentliches terrestrisches Mobilfunknetz [registered-public land mobile network], der auf das zweite Mobilkommunikationsnetzwerk (PLMN#2) angewendet werden soll, eingestellt in zweiter Rundsendeinformation, die von der Mobilstation (MTC-UE) empfangen wird, zusätzlich zu einem EAB-Parameter für ein P-PLMN, Primär-PLMN, der auf das erste Mobilkommunikationsnetzwerk (PLMN#1) angewendet werden soll, die Bestimmungseinheit (12) konfiguriert ist, das Vorhandensein der Zugriffssteuerung auf der Basis des EAB-Parameters für das R-PLMN zu bestimmen.

## Revendications

1. Station mobile (MTC-UE) prenant en charge une communication de type machine et configurée pour être utilisée dans un système de communication mobile ayant une configuration dans laquelle une station de base radio (eNB) est connectée à un premier réseau de communication mobile (PLMN#1) et un deuxième réseau de communication mobile (PLMN#2) et dans laquelle le premier réseau de communication mobile (PLMN#1) et le deuxième réseau de communication mobile (PLMN#2) comprennent des réseaux centraux différents (CN#1, CN#2), la station mobile (MTC-UE) comprenant :
une unité de détermination (12) configurée pour déterminer l'existence d'une commande d'accès, dans laquelle
le premier réseau de communication mobile (PLMN#1) est un réseau de communication mobile en haut d'une liste de réseaux de communication mobile comprise dans des premières informations de radiodiffusion reçues par la station mobile (MTC-UE),
le deuxième réseau de communication mobile (PLMN#2) est un réseau de communication mobile, pour lequel une procédure de rattachement menée par la station mobile (MTC-UE) est réussie, et
en réponse à un paramètre d'interdiction d'accès étendu, EAB [extended access barring], pour un réseau mobile terrestre public enregistré, R-PLMN [registered-public land mobile network], à appliquer au deuxième réseau de communication mobile (PLMN#2) réglé dans des deuxièmes informations de radiodiffusion reçues par la station mobile (MTC-UE) en plus d'un paramètre EAB pour un PLMN, P-PLMN primaire, à appliquer au premier réseau de communication mobile (PLMN#1), l'unité de détermination (12) est configurée pour déterminer l'existence de la commande d'accès sur la base du paramètre EAB pour le R-PLMN.
